# EUROPÄISCHE PATENTSCHRIFT

(11) **EP 1 658 970 B1**
(45) Veröffentlichungstag und Bekanntmachung des Hinweises auf die Patenterteilung: **24.06.2009**
(21) Anmeldenummer: 04027801.2
(22) Anmeldetag: 23.11.2004
(51) Int. Cl.: B32B 27/12, B32B 5/02, D04H 3/08, D04H 3/10, D04H 13/00

(54) **Laminat aus zumindest drei Schichten und Verfahren zur Herstellung eines zumindest dreischichtigen Laminates**
Laminate having at least three layers and process for producing the same
Laminé comportant au moins trois couches et son procédé de fabrication

(43) Veröffentlichungstag der Anmeldung: 24.05.2006
(73) Patentinhaber: Reifenhäuser GmbH & Co. KG Maschinenfabrik, 53839 Troisdorf (DE)
(72) Erfinder: Sommer, Sebastian, 53844 Troisdorf (DE); Güdden, Jens, 53842 Spich (DE); Frey, Detlef, 53859 Niederkassel (DE)
(74) Vertreter: Rohmann, Michael

(56) Entgegenhaltungen:
- EP-A- 0 989 222
- EP-A- 1 375 132
- EP-A- 1 445 366
- WO-A1-02/29146
- WO-A1-02/098653
- US-A- 5 151 320
- US-B1- 6 649 548

## Beschreibung

Die Erfindung betrifft ein Laminat aus zumindest drei Schichten, wobei eine Schicht dieses Laminates von zumindest einem Spinnvlies aus Endlosfasern gebildet wird. Die Erfindung betrifft fernerhin ein Verfahren zur Herstellung eines zumindest dreischichtigen Laminates. - Es liegt im Rahmen der Erfindung, dass die Endlosfasern aus einem thermoplastischen Kunststoff bestehen. Die Endlosfasern werden nachfolgend auch als Filamente bezeichnet. Die Endlosfasern werden mit Hilfe einer Spinnvorrichtung erzeugt und in Form eines Wirrvlieses auf einer Ablage abgelegt. Anschließend erfolgt in der Regel eine Verfestigung des Wirrvlieses bzw. Spinnvlieses.

Das Dokument WO-A-02/29146 beschreibt Laminate, die ein Spinnvlies aufweisen, welches vorverfestigt wurde, und das Laminat enthält eine Barriereschicht.

Laminate der eingangs genannten Art sind aus der Praxis in verschiedenen Ausführungsformen bekannt, bei denen eine Schicht von einem Spinnvlies gebildet wird. Das Spinnvlies kann beispielsweise mit einer Folie kaschiert werden. Die für solche Laminate eingesetzten Spinnvliese werden in der Regel durch intensives Kalandrieren verfestigt. Bei diesen intensiven Verfestigungsmaßnahmen wird in der Regel die Dicke des Spinnvlieses relativ stark reduziert. Dadurch entstehen Spinnvliese bzw. Laminate mit Spinnvliesen, deren Biegesteifigkeit zu wünschen übrig lässt. Bei diesen bekannten Laminaten mit Spinnvliesen ist eine hohe Biegesteifigkeit auch nicht unbedingt beabsichtigt. - Die bekannten Laminate aus einem Spinnvlies und einer Folie weisen aber noch weitere Nachteile auf. Durch das intensive Kalandrieren des Spinnvlieses entstehen aufgrund des Einwirkens der Kalanderpunkte Vertiefungen in der entsprechenden Spinnvliesoberfläche und somit resultiert eine raue Topologie. Wenn dann beispielsweise eine Folie auf dieser Spinnvliesoberfläche aufgeklebt werden soll, wird zum Ausfüllen der Unebenheiten in der Spinnvliesoberfläche unerwünscht viel Kleber verbraucht oder aber die Folie wird lediglich an einem Teil der Spinnvliesoberfläche angeklebt, so dass eine relativ schwache Verbindung zwischen Folie und Spinnvlies resultiert. Wenn andererseits die Folie im Rahmen einer Schmelzebeschichtung auf die unebene Spinnvliesoberfläche aufgebracht werden soll, führt das zu einer profilierten bzw. rauen Außenoberfläche der aufgebrachten Folie, so dass das resultierende Laminat in Bezug auf das ästhetische Erscheinungsbild zu wünschen übrig lässt. Außerdem wird aufgrund der rauen bzw. profilierten Oberfläche des Laminates die spätere Bedruckbarkeit erschwert.

Demgegenüber liegt der Erfindung das technische Problem zugrunde, ein Laminat der eingangs genannten Art anzugeben, das einerseits eine hohe Biegesteifigkeit aufweist, bei dem andererseits die Schichten effektiv und fest miteinander verbunden sind und das sich außerdem durch eine hohe Oberflächenqualität und ein optimales ästhetisches Erscheinungsbild auszeichnet. Der Erfindung liegt weiterhin das technische Problem zugrunde, ein Verfahren zur Herstellung eines solchen zumindest dreischichtigen Laminates anzugeben.

Zur Lösung dieses technischen Problems lehrt die Erfindung ein Laminat aus zumindest drei Schichten, wobei eine Schicht des Laminates von zumindest einem Spinnvlies aus Endlosfasern gebildet wird, wobei es sich um ein durch Einwirkung eines heißen Fluids thermisch verfestigtes Spinnvlies handelt und wobei sowohl an der Oberseite als auch an der Unterseite des Spinnvlieses jeweils eine Folie angeordnet ist und wobei die Folien mittels einer Klebverbindung oder mittels einer Schmelzebeschichtung fest mit dem Spinnvlies verbunden sind. - Die thermische Verfestigung des Spinnvlieses mit dem heißen Fluid wird nach sehr bevorzugter Ausführungsform als Heißluftverfestigung durchgeführt.

Eine bevorzugte Ausführungsform der Erfindung ist dadurch gekennzeichnet, dass eine Verfestigung des Spinnvlieses ausschließlich als thermische Verfestigung mit Hilfe des heißen Fluids bzw. mit Hilfe von Heißluft durchgeführt wird und dass eine Vorverfestigung durch Kalandrieren und/oder Vernadeln nicht erfolgt. Es liegt aber auch im Rahmen der Erfindung, dass das für das Laminat bestimmte Spinnvlies vor der thermischen Verfestigung geringfügig bzw. leicht kalandriert wird oder geringfügig bzw. leicht vernadelt wird. Das wird weiter unten näher erläutert.

Nach besonders bevorzugter Ausführungsform der Erfindung werden Folien aus thermoplastischem Kunststoff eingesetzt. Zweckmäßigerweise sind zwei aus thermoplastischem Kunststoff bestehende Folien für das erfindungsgemäße Laminat vorgesehen, wobei eine dieser Folien an der Oberseite und die andere an der Unterseite des Spinnvlieses angeschlossen ist. Es liegt im Rahmen der Erfindung, dass es sich um extrudierte Kunststofffolien handelt, die beispielsweise mit einem geeigneten Breitschlitzwerkzeug hergestellt werden. Vorzugweise besteht zumindest eine mit dem Spinnvlies verbundene Kunststofffolie, vorzugsweise zwei beidseitig an das Spinnvlies angeschlossene Kunststofffolien zu zumindest 50 Gew.-% aus einem Kunststoff, aus dem auch die Filamente des Spinnvlieses bestehen. Nach besonders bevorzugter Ausführungsform bestehen mindestens 50 Gew.-%, vorzugsweise mindestens 60 Gew.-% des gesamten Laminates aus einem einzigen Kunststoff, beispielsweise aus Polypropylen. Weitere Komponenten des Laminates können dann insbesondere mineralische Komponenten sein, die sich vor allem in den weiteren an das Spinnvlies anschließenden Schichten befinden. Wenn Kunststofffolien an das Spinnvlies angeschlossen sind, enthalten diese Folien beispielsweise Calciumcarbonat.

Erfindungsgemäß sind die an das Spinnvlies unmittelbar anschließende, Folien mittels einer Klebverbindung oder in Form einer Schmelzebeschichtung fest mit dem Spinnvlies verbunden. Fest mit dem Spinnvlies verbunden meint im Rahmen der Erfindung, dass die Folie nicht lose auf dem Spinnvlies angeordnet ist und nicht ohne weiteres bzw. nicht ohne größere Krafteinwirkung von dem Spinnvlies gelöst werden kann. Die Befestigung der Folien an dem Spinnvlies erfolgt mit einer Klebverbindung , wobei zweckmäßigerweise ein Schmelzekleber verwendet wird. Es liegt im Rahmen der Erfindung, dass zwischen dem Spinnvlies und einer daran unmittelbar angeschlossenen Folie, eine Hotmelt-Klebverbindung verwirklicht wird. Wie oben bereits dargelegt, liegt es aber auch im Rahmen der Erfindung, dass die Folien im Rahmen einer Schmelzebeschichtung auf das Spinnvlies aufgebracht werden. Dann werden die beiden Folien als Schmelze bzw. in schmelzflüssiger Form auf das Spinnvlies aufgebracht.

Zur Lösung des technischen Problems lehrt die Erfindung weiterhin ein Verfahren zur Herstellung eines zumindest dreischichtigen Laminates, wobei zunächst Endlosfilamente mit einer Spinnvorrichtung erzeugt werden und als Wirrvlies bzw. Spinnvlies auf einer Ablage abgelegt werden, wobei weiterhin eine thermische Verfestigung des abgelegten Wirrvlieses bzw. Spinnvlieses mittels eines heißen Fluids durchgeführt wird und wobei danach das thermisch verfestigte Spinnvlies an seiner Oberseite und an seiner Unterseite jeweils mit einer Folie fest verbunden wird. Der Begriff "feste Verbindung" wurde bereits weiter oben definiert.

Die thermische Verfestigung des Spinnvlieses wird mit der Maßgabe durchgeführt, dass die Dicke des Spinnvlieses nach der thermischen Verfestigung zumindest 40 %, vorzugsweise zumindest 50 %, bevorzugt zumindest 60 % und sehr bevorzugt zumindest 70 % der Dicke des Spinnvlieses vor der thermischen Verfestigung beträgt. Wenn vor der thermischen Verfestigung eine leichte Vorverfestigung durch leichtes Kalandrieren oder leichtes Vernadeln erfolgt, so wird die thermische Verfestigung des Spinnvlieses mit der Maßgabe durchgeführt, dass die Dicke des Spinnvlieses nach der thermischen Verfestigung zumindest 50 %, vorzugsweise zumindest 60 %, bevorzugt zumindest 70 % und sehr bevorzugt zumindest 80 % der Dicke des Spinnvlieses nach der leichten Vorverfestigung und vor der thermischen Verfestigung beträgt. - Dicke des Spinnvlieses meint im Rahmen der Erfindung die Ausdehnung des Spinnvlieses bzw. der Vliesbahn in senkrechter Richtung zur Spinnvliesfläche bzw. -oberfläche bzw. senkrecht zur flächigen Ablage für die Vliesbahn.

Erfindungsgemäß wird das Spinnvlies also unter Einsatz eines heißen fluiden Mediums, insbesondere unter Einsatz von Heißluft verfestigt bzw. endverfestigt. Verfestigung meint hier ein Thermobondieren des Spinnvlieses bzw. der Filamente des Spinnvlieses. Das Spinnvlies wird dazu zweckmäßigerweise von dem heißen fluiden Medium durchströmt. Als Verfestigungsvorrichtung bzw. Thermobondiervorrichtung wird vorzugsweise ein Heißluftofen eingesetzt, insbesondere in Form eines Trommeltrockners. Es liegt somit im Rahmen der Erfindung, dass die Verfestigung in einem Heißluftverfestigungstrockner stattfindet.

Wie oben bereits zum Ausdruck gebracht, liegt es im Rahmen der Erfindung, dass die Verfestigung mit dem heißen fluiden Medium so durchgeführt wird, dass die Dicke des Spinnvlieses nicht bzw. nicht wesentlich reduziert wird. Dazu wird vorzugsweise die Dauer der Einwirkung des heißen fluiden Mediums und/oder die Temperatur des heißen fluiden Mediums und/oder die Menge des einwirkenden heißen fluiden Mediums entsprechend eingestellt. Die thermische Verfestigung wird also nach sehr bevorzugter Ausführungsform der Erfindung gleichsam sehr schonend durchgeführt, damit die Dicke des Spinnvlieses möglichst weitgehend erhalten bleibt. Es liegt im Rahmen der Erfindung, dass die thermische Verfestigung bei einer Verfestigungstemperatur durchgeführt wird, die zwischen der Erweichungstemperatur und der Schmelztemperatur des Filamentkunststoffes liegt. Filamentkunststoff meint den Kunststoff, aus dem die Filamente bestehen. In dem genannten Temperaturbereich wird ein Thermobondieren des Spinnvlieses bzw. der Filamente durchgeführt. Insoweit unterscheidet sich diese Verfestigung von einem Thermofixieren, bei dem geringere Temperaturen ausreichen. Besonders bevorzugt ist eine erfindungsgemäße Ausführungsform, bei der ein Teil der Filamente im Spinnvlies kurzzeitig ihre Aufschmelztemperatur erreichen. Auf diese Weise erzielt man eine effektive Verbindung zwischen benachbarten Filamenten. - Wenn für das Spinnvlies Fasermischungen und/oder Bikomponentenfilamente bzw. Multikomponentenfilamente verwendet werden, so richtet sich die oben erläuterte Verfestigungstemperatur nach dem am niedrigsten schmelzenden Kunststoff bzw. bei Bikomponentenfilamenten oder Multikomponentenfilamenten nach dem am niedrigsten schmelzenden Kunststoff in der Filamentoberfläche.

Nach einer Ausführungsform der Erfindung wird das Spinnvlies nicht nur ausschließlich thermisch verfestigt, sondern vor der thermischen Endverfestigung leicht bzw. geringfügig vorverfestigt. Durch diese geringe Vorverfestigung soll das Spinnvlies für den Transport zur thermischen Verfestigung stabilisiert werden und gegen in der thermischen Verfestigung auf das Spinnvlies einwirkende Kräfte, insbesondere aerodynamische Kräfte stabilisiert werden. - Nach einer ersten Ausführungsvariante erfolgt die geringe Vorverfestigung durch leichtes Kalandrieren. Leichtes Kalandrieren meint ein gegenüber dem herkömmlichen Kalandrieren eines vorgegebenen Spinnvlieses insbesondere bei verminderter Temperatur der Kalanderwalzen und/oder bei vermindertem Anpressdruck bzw. Liniendruck der Kalanderwalzen durchgeführtes Kalandrieren. Beim leichten Kalandrieren werden im Wesentlichen oberflächennahe Filamente des Spinnvlieses miteinander verbunden. Zweckmäßigerweise wird das Kalandrieren so durchgeführt, dass die nach dem Kalandrieren miteinander verbundenen Filamente vor dem Kalandrieren zu mindestens 80 %, vorzugsweise zu mindestens 90 % im oberen und unteren Fünftel des Spinnvlieses (bezogen auf die Dicke des Spinnvlieses) angeordnet waren.

Es liegt im Rahmen der Erfindung, dass das leichte Kalandrieren mit der Maßgabe durchgeführt wird, dass das leicht kalandrierte Spinnvlies eine Höchstzugfestigkeit aufweist, die weniger als 50 %, bevorzugt maximal 45 % der maximal für dieses Spinnvlies erreichbaren Höchstzugfestigkeit beträgt. Die Höchstzugfestigkeit ist definiert in DIN 53816. Maximale Höchstzugfestigkeit meint im Rahmen der Erfindung diejenige Höchstzugfestigkeit, die mit dem entsprechenden Kalander unter sonst gleichen Bedingungen (Vlieseigenschaften, Vliesablage, Produktionsgeschwindigkeit etc.) nur durch Variation des Anpressdruckes und/oder der Temperatur der Kalanderwalzen maximal erreichbar ist. Die erfindungsgemäß eingestellte Höchstzugfestigkeit des Spinnvlieses ergibt sich insbesondere wie folgt. Der Anpressdruck und/oder die Temperatur des Kalanders bzw. der Kalanderwalzen wird zunächst so variiert, dass sich die maximale bzw. höchstmögliche Höchstzugfestigkeit für das kalandrierte Spinnvlies ergibt. Dabei handelt es sich also um die für das vorgegebene Spinnvlies größtmögliche Höchstzugfestigkeit bei maximaler Verfestigung durch das Kalandrieren. Um dann einen erfindungsgemäßen Wert von weniger als 50 % bzw. von maximal 45 % der maximalen Höchstzugfestigkeit einzustellen, wird zweckmäßigerweise bei ansonsten gleichen Bedingungen (wie bei der Festlegung der maximalen Höchstzugfestigkeit) der Anpressdruck und/oder die Temperatur des Kalanders bzw. der Kalanderwalzen verändert, bis der erfindungsgemäße Wert der Höchstzugfestigkeit erreicht wird.

Es liegt im Rahmen der Erfindung, dass das leichte Kalandrieren mit der Maßgabe durchgeführt wird, dass die Dicke des leicht kalandrierten Spinnvlieses zumindest 50 %, vorzugsweise zumindest 60 % und bevorzugt zumindest 70 % der Dicke des Spinnvlieses vor dem leichten Kalandrieren beträgt. Nach besonders bevorzugter Ausführungsform der Erfindung wird das leichte Kalandrieren mit der Maßgabe durchgeführt, dass die Dicke des leicht kalandrierten Spinnvlieses zumindest 75 %, vorzugsweise zumindest 80 % und bevorzugt zumindest 85 % der Dicke des Spinnvlieses vor dem leichten Kalandrieren beträgt. Die Dicke des Spinnvlieses vor dem leichten Kalandrieren meint die Dicke des Spinnvlieses unmittelbar vor dem Einlauf in den Kalander bzw. in die Kalandervorrichtung. Es liegt dabei im Rahmen der Erfindung, dass das Spinnvlies vorher, d. h. nach seiner Ablage ein Auslaufwalzenpaar passiert hat. - Die Bedingungen für das leichte Kalandrieren werden also so gewählt, dass die Dicke des Spinnvlieses nicht wesentlich reduziert wird. Das erfolgt insbesondere durch entsprechendes Einstellen der Temperatur und/oder des Anpressdruckes der Kalanderwalzen und/oder durch entsprechende Auswahl der Größe der Prägefläche der Kalanderwalzen und/oder durch Auswahl des Prägemusters der Kalanderwalzen. Nach besonders bevorzugter Ausführungsform liegt die Temperatur der Kalanderwalzen in einem Temperaturbereich zwischen 50 °C unterhalb des Schmelzpunktes des Filamentkunststoffes bis zum Schmelzpunkt des Filamentkunststoffes. Wenn eine Fasermischung eingesetzt wird oder Bikomponentenfilamente bzw. Multikomponentenfilamente verwendet werden, richtet sich der vorgenannte Temperaturbereich nach dem am niedrigsten schmelzenden Kunststoff bzw. bei Bikomponentenfilamenten/Multikomponentenfilamenten nach dem Schmelzpunkt des am niedrigsten schmelzenden Filamentkunststoffes in der Filamentoberfläche. - Kalandertemperatur meint im Rahmen der Erfindung die gemittelte Oberflächentemperatur der Kalanderwalzen. Nach bevorzugter Ausführungsform der Erfindung wird für das leichte Kalandrieren ein Liniendruck der Kalanderwalzen zwischen 10 und 120 daN/cm, bevorzugt zwischen 20 und 60 daN/cm eingestellt. Zweckmäßigerweise weist der Kalander eine Prägefläche von 3 bis 35 %, bevorzugt von 5 bis 20 % auf. - Wenn für das leichte Kalandrieren eine hohe Kalandertemperatur eingestellt wird, versteht es sich, dass der Anpressdruck bzw. Liniendruck der Kalanderwalzen entsprechend geringer eingestellt wird. Wenn andererseits ein hoher Anpressdruck bzw. Liniendruck der Kalanderwalzen für das leichte Kalandrieren eingestellt ist, versteht es sich, dass dann die Kalanderwalzentemperatur entsprechend geringer gewählt wird.

Nach einer weiteren zweiten Ausführungsvariante der Erfindung wird das Spinnvlies ebenfalls nicht ausschließlich thermisch verfestigt, sondern vor der thermischen Endverfestigung durch leichtes mechanisches Vernadeln oder durch leichtes hydrodynamisches Vernadeln vorverfestigt. Das leichte mechanische Vernadeln wird sehr bevorzugt durchgeführt. Ein mechanisches Vernadeln wird mit Hilfe einer Mehrzahl bzw. Vielzahl von Nadeln durchgeführt, die normalerweise an einem Nadelbalken bzw. an Nadelbalken angeordnet sind. Insoweit unterscheidet sich ein mechanisches Vernadeln von einem hydrodynamischen Vernadeln, bei dem mit Wasserstrahlen gearbeitet wird. Es liegt im Rahmen der Erfindung, dass eine Vorverfestigung des Spinnvlieses lediglich durch leichtes Vernadeln stattfindet und anschließend die thermische Endverfestigung mit dem heißen Fluid durchgeführt wird. Ein Kalandrieren bzw. ein leichtes Kalandrieren des Spinnvlieses findet dann also nicht statt. Leichtes Vernadeln meint im Rahmen der Erfindung eine weniger intensive Vernadelung des Spinnvlieses als bei üblichen Vernadelungsverfahren, so dass die Dicke des Spinnvlieses nach dem leichten Vernadeln möglichst erhalten bleibt bzw. nicht reduziert wird oder (wie nachfolgend noch erläutert) nach sehr bevorzugter Ausführungsform erhöht wird.

Es liegt im Rahmen der Erfindung, dass das leichte mechanische oder hydrodynamische Vernadeln mit der Maßgabe durchgeführt wird, dass die Dicke des mechanisch vernadelten Spinnvlieses zumindest 60 %, vorzugsweise zumindest 75 %, bevorzugt zumindest 85 % und sehr bevorzugt zumindest 90 % der Dicke des Spinnvlieses vor der leichten Vernadelung beträgt. Nach besonders bevorzugter Ausführungsform der Erfindung beträgt die Dicke des mechanisch vernadelten Spinnvlieses mehr als 95 % der Dicke des Spinnvlieses vor der leichten Vernadelung. Mit der Dicke des Spinnvlieses vor der leichten Vernadelung ist die Dicke des Spinnvlieses unmittelbar vor dem Einlauf in die Vernadelungsvorrichtung gemeint. Es liegt dabei im Rahmen der Erfindung, dass das Spinnvlies vorher, d. h. nach seiner Ablage ein Auslaufwalzenpaar passiert hat. - Bei dem leichten Vernadeln soll also eine möglichst geringe Dickenreduzierung, vorzugsweise gar keine Dickenreduzierung und sehr bevorzugt eine Dickenerhöhung des Spinnvlieses erreicht werden. Wie oben bereits dargelegt findet nach sehr bevorzugter Ausführungsform ein leichtes mechanisches Vernadeln statt.

Eine Dickenerhöhung wird bei der leichten mechanischen Vernadelung des Spinnvlieses dadurch verwirklicht, dass in das Spinnvlies eintauchende Nadeln Filamente erfassen und diese Filamente quer zur Vliesfläche verschieben und anschließend aus der der Eintauchoberfläche gegenüberliegenden Vliesoberfläche herausschieben. Dadurch erhöht sich die Querausdehnung bzw. die Dicke des Spinnvlieses. Dieser Effekt ist nur realisierbar, wenn lediglich ein leichtes bzw. wenig intensives Vernadeln stattfindet und insbesondere mit einer geringen Einstichdichte gearbeitet wird. Die Nadeln zum mechanischen Vernadeln von Spinnvliesen weisen häufig jeweils eine Mehrzahl von Kerben auf, die jeweils in der Lage sind Filamente gleichsam mitzunehmen und quer zur Vliesfläche zu verschieben. Bei den Kerben handelt es sich also um Mitnahmeelemente für die Filamente. Die Einstichdichte wird als Anzahl der pro cm² Spinnvliesfläche bzw. -oberfläche durch das Produkt gestoßenen Kerben bzw. Mitnahmeelemente angegeben. Wenn eine Nadel lediglich eine Kerbe bzw. lediglich ein Mitnahmeelement aufweist, dann entspricht die Einstichdichte der Anzahl der Nadeleinstiche pro cm² Spinnvliesfläche bzw. -oberfläche. Nach besonders bevorzugter Ausführungsform der Erfindung wird mit einer Einstichdichte von 30/cm² bis 360/cm², vorzugsweise von 100/cm² bis 300/cm² und sehr bevorzugt von 150/cm² bis 240/cm² mechanisch vernadelt.

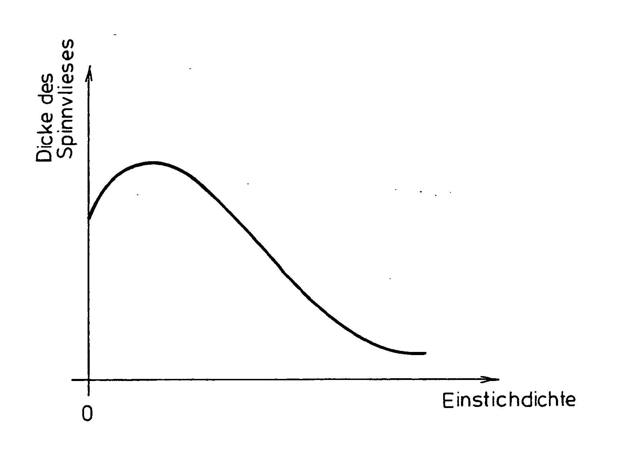

Die einzige Figur zeigt im Übrigen den Zusammenhang zwischen der resultierenden Dicke des Spinnvlieses nach der mechanischen Vernadelung und der Einstichdichte. Es ist erkennbar, dass bei geringen Einstichdichten grundsätzlich auch eine Erhöhung der Spinnvliesdicke im Vergleich zur ursprünglichen Spinnvliesdicke (Spinnvliesdicke bei der Einstichdichte 0) erreichbar ist. Bei höheren Einstichdichten und bei dementsprechend intensiverem mechanischen Vernadeln ist eine solche Dickenerhöhung nicht mehr möglich. Vielmehr wird bei hoher Einstichdichte und intensivem mechanischen Vernadeln die Dicke des Spinnvlieses reduziert.

Nach sehr bevorzugter Ausführungsform der Erfindung wird bei dem leichten mechanischen Vernadeln mit einer Einstichtiefe von 2 bis 15 mm, vorzugsweise von 5 bis 12 mm und sehr bevorzugt von 7 bis 11 mm gearbeitet. Die Einstichtiefe entspricht der maximalen Länge, um die die Nadel aus der der Eintauchoberfläche gegenüberliegenden Vliesoberfläche austritt (Abstand der Nadelspitze zu dieser gegenüberliegenden Oberfläche). Die mechanische Vernadelung kann von der Oberseite des Spinnvlieses her erfolgen oder von der Unterseite des Spinnvlieses her erfolgen. Nach sehr bevorzugter Ausführungsform der Erfindung wird von beiden Seiten, d. h. von der Oberseite und von der Unterseite des Spinnvlieses mechanisch vernadelt. - Die Messung der Spinnvliesdicke erfolgt im Übrigen nach DIN EN 29703 Teil 2.

Das erfindungsgemäße Verfahren ist dadurch gekennzeichnet, dass zumindest eine der mit dem thermisch verfestigten Spinnvlies zu verbindenden Folie aus thermoplastischem Kunststoff ist, die im Rahmen einer Schmelzebeschichtung auf das Spinnvlies aufgebracht wird. Vorzugsweise handelt es sich bei beiden mit dem thermisch verfestigten Spinnvlies zu verbindenden Folien um aus Folien thermoplastischem Kunststoff, die im Rahmen einer solchen Schmelzebeschichtung von beiden Seiten auf das Spinnvlies aufgebracht werden.

Nach eine anderen Ausführungsform der Erfindung ist zumindest eine der mit dem thermisch verfestigten Spinnvlies zu verbindenden Folie eine Folie aus thermoplastischem Kunststoff, die mit Hilfe eines Klebers, vorzugsweise mit Hilfe eines Schmelzklebers auf das Spinnvlies aufgeklebt wird. Zweckmäßigerweise sind im Rahmen dieser Ausführungsform beide mit dem thermisch verfestigten Spinnvlies zu verbindenden Folien aus thermoplastischem Kunststoff, die mit Hilfe eines Klebers, vorzugsweise mit Hilfe eines Schmelzklebers auf das Spinnvlies aufgeklebt werden.

Es liegt auch im Rahmen der Erfindung, dass eine Folie aus thermoplastischem Kunststoff von einer Seite im Rahmen einer Schmelzebeschichtung auf das Spinnvlies aufgebracht wird und dass eine Folie aus thermoplastischem Kunststoff auf der anderen gegenüberliegenden Seite des Spinnvlieses mit Hilfe eines Klebers, vorzugsweise mit Hilfe eines Schmelzklebers auf das Spinnvlies aufgeklebt wird. - Nach bevorzugter Ausführungsform der Erfindung handelt es sich bei einer auf das Spinnvlies aufzubringenden Folie um eine einschichtige Folie. Es liegt aber auch im Rahmen der Erfindung, dass eine solche Folie ein Laminat aus einer Mehrzahl von Folien sein kann.

Der Erfindung liegt zunächst die Erkenntnis zugrunde, dass durch die erfindungsgemäßen Behandlungsmaßnahmen, d. h. durch die leichte bzw. sehr schonende Vorverfestigung des Spinnvlieses und die thermische Endverfestigung mit dem heißen Fluid erreicht wird, dass die Endlosfasern im verfestigten Vlies im Wesentlichen parallel zur Fläche bzw. Oberfläche des Spinnvlieses ausgerichtet sind. Außerdem liegt der Erfindung die Erkenntnis zugrunde, dass aufgrund der erfindungsgemäßen Behandlungsmaßnahmen eine hohe Vliesdicke beibehalten wird. Diese vorgenannten Eigenschaften führen zu einer überraschend hohen Biegesteifigkeit des erfindungsgemäßen Laminates. Im Übrigen werden bei der erfindungsgemäßen Behandlung des Spinnvlieses sehr gleichmäßige und ebene Spinnvliesoberflächen erhalten. Bei Beschichtung dieser Spinnvliesoberflächen ist dann gewährleistet, dass auch die Beschichtungen, beispielsweise aufgebrachte Folien sehr eben und glatt sind und unerwünschte Profilierungen bzw. eine unerwünschte Rauigkeit nicht auftreten. Das Laminat genügt deshalb auch im Hinblick auf sein äußeres Erscheinungsbild bzw. im Hinblick auf Ästhetik allen Anforderungen. Insoweit ergeben sich beachtliche Vorteile gegenüber den aus dem Stand der Technik bekannten Laminaten.

## Patentansprüche

1. Laminat aus zumindest drei Schichten, wobei eine Schicht des Laminates von zumindest einem Spinnvlies aus Endlosfasern gebildet wird, wobei es sich um ein durch Einwirkung eines heißen Fluids thermisch verfestigtes Spinnvlies handelt, wobei sowohl an der Oberseite als auch an der Unterseite des Spinnvlieses jeweils eine Folie angeordnet ist und wobei die Folien mittels einer Klebverbindung oder mittels einer Schmelzebeschichtung fest mit dem Spinnvlies verbunden sind.

2. Laminat nach Anspruch 1, wobei die Folien aus thermoplastischem Kunststoff bestehen.

3. Verfahren zur Herstellung eines zumindest dreischichtigen Laminates, wobei zunächst Endlosfilamente mit einer Spinnvorrichtung erzeugt werden und als Spinnvlies auf einer Ablage abgelegt werden, wobei weiterhin eine thermische Verfestigung des Spinnvlieses mittels eines heißen Fluids durchgeführt wird, wobei diese thermische Verfestigung des Spinnvlieses mit der Maßgabe durchgeführt wird, dass die Dicke des Spinnvlieses nach der thermischen Verfestigung zumindest 40 % der Dicke des Spinnvlieses vor der thermischen Verfestigung beträgt und wobei danach das thermisch verfestigte Spinnvlies an seiner Oberseite und an seiner Unterseite jeweils mit einer Folie fest verbunden wird.

4. Verfahren nach Anspruch 3, wobei die thermische Verfestigung des Spinnvlieses mit der Maßgabe durchgeführt wird, dass die Dicke des Spinnvlieses nach der thermischen Verfestigung zumindest 50 %, bevorzugt zumindest 70 %, sehr bevorzugt zumindest 80 % der Dicke des Spinnvlieses vor der thermischen Verfestigung beträgt.

5. Verfahren nach einem der Ansprüche 3 oder 4, wobei das Spinnvlies vor der thermischen Verfestigung durch leichtes Kalandrieren vorverfestigt wird.

6. Verfahren nach einem der Ansprüche 3 bis 5, wobei das Spinnvlies vor der thermischen Verfestigung durch leichtes mechanisches Vernadeln vorverfestigt wird.

7. Verfahren nach einem der Ansprüche 3 bis 6, wobei eine Folie mit Hilfe eines Schmelzklebers auf das Spinnvlies aufgeklebt wird.

## Claims

1. Laminate consisting of at least three layers, wherein one layer of the laminate is formed by at least one spunbond nonwoven made from continuous filaments, wherein this is a spunbond nonwoven which is thermally consolidated under the effect of a hot fluid, wherein a respective film is arranged both on the upper side and on the underside of the spunbond nonwoven, and wherein the films are securely bonded to the spunbond nonwoven by means of adhesive bonding or by means of melt-coating.

2. Laminate according to claim 1, wherein the films are made from thermoplastic plastic.

3. Method for producing a laminate consisting of at least three layers, wherein firstly continuous filaments are produced by means of a spinning device and are deposited as a spunbond nonwoven on a depositing surface, wherein furthermore a thermal consolidation of the spunbond nonwoven is carried out by means of a hot fluid, wherein this thermal consolidation of the spunbond nonwoven is carried out with the proviso that the thickness of the spunbond nonwoven after the thermal consolidation is at least 40% of the thickness of the spunbond nonwoven before the thermal consolidation, and wherein thereafter the thermally consolidated spunbond nonwoven is securely bonded to a respective film on its upper side and on its underside.

4. Method according to claim 3, wherein the thermal consolidation of the spunbond nonwoven is carried out with the proviso that the thickness of the spunbond nonwoven after the thermal consolidation is at least 50%, preferably at least 70%, highly preferably at least 80% of the thickness of the spunbond nonwoven before the thermal consolidation.

5. Method according to one of claims 3 or 4, wherein the spunbond nonwoven is pre-consolidated by slight calendering before the thermal consolidation.

6. Method according to one of claims 3 to 5, wherein the spunbond nonwoven is pre-consolidated by slight mechanical needling before the thermal consolidation.

7. Method according to one of claims 3 to 6, wherein a film is adhesively bonded to the spunbond nonwoven by means of a hot-melt adhesive.

## Revendications

1. Stratifié comprenant au moins trois couches, une couche du stratifié étant formée d'au moins un filé-lié de filaments, le filé-lié étant un filé-lié renforcé thermiquement sous l'effet d'un fluide chaud, une feuille étant disposée aussi bien sur le côté supérieur que sur le côté inférieur du filé-lié et les feuilles étant assemblées fixement avec le filé-lié au moyen d'un joint collé ou d'un revêtement à fusion.

2. Stratifié suivant la revendication 1, dans lequel les feuilles se composent d'une matière thermoplastique.

3. Procédé de fabrication d'un stratifié comprenant au moins trois couches, dans lequel des filaments sont d'abord produits par un dispositif de filage et déposés sous forme de filé-lié sur un support, dans lequel un renforcement thermique du filé-lié est en outre réalisé au moyen d'un fluide chaud, dans lequel ce renforcement thermique du filé-lié est réalisé de sorte que l'épaisseur du filé-lié représente, après le renforcement thermique, au moins 40% de l'épaisseur du filé-lié avant le renforcement thermique, et dans lequel le filé-lié renforcé thermiquement est ensuite assemblé fixement sur son côté supérieur et sur son côté inférieur avec une feuille.

4. Procédé suivant la revendication 3, dans lequel le renforcement thermique du filé-lié est réalisé de sorte que l'épaisseur du filé-lié représente, après le renforcement thermique, au moins 50%, de préférence au moins 70%, très préférentiellement au moins 80% de l'épaisseur du filé-lié avant le renforcement thermique.

5. Procédé suivant l'une des revendications 3 et 4, dans lequel le filé-lié est pré-renforcé, avant le renforcement thermique, par un léger calandrage.

6. Procédé suivant l'une des revendications 3 à 5, dans lequel le filé-lié est pré-renforcé, avant le renforcement thermique, par un léger aiguilletage mécanique.

7. Procédé suivant l'une des revendications 3 à 6, dans lequel une feuille est collée sur le filé-lié à l'aide d'une colle à fusion.
